# EUROPEAN PATENT APPLICATION

(11) **EP 4 749 753 A2**
(43) Date of publication of application: **27.05.2026**
(21) Application number: 26169073.9
(22) Date of filing: 30.03.2026
(51) Int. Cl.: H01M 10/0587, H01M 50/536

(54) **CYLINDRICAL BATTERY AND ELECTRIC DEVICE**

(30) Priority: 25.06.2025 CN 202510864244
(71) Applicant: Ningde Amperex Technology Limited, Ningde City, Fujian Province 352100 (CN)
(72) Inventor: CHEN, Tengteng, Ningde City, 352100 (CN)
(74) Representative: Kraus & Lederer PartGmbB

(57) **Abstract**

This application provides a cylindrical battery and an electric device. The cylindrical battery includes an electrode assembly and an adhesive tape. The electrode assembly is a wound structure and has a winding central axis. The electrode assembly includes a first electrode sheet and a first tab. An outermost turn of the first electrode sheet is connected to the first tab. The first electrode sheet is provided with a winding tail end. The adhesive tape includes a first portion and a second portion. The first portion is attached to the first electrode sheet. The second portion is attached to the first tab. Along a winding direction of the electrode assembly, the second portion includes a first side and a second side that are oppositely disposed. The second side is closer to the winding tail end than the first side. The first portion is located on the first side. When viewed from an extension direction of the winding central axis, a line connecting a winding center and one end of the first portion close to the second portion is defined as a first virtual line, a line connecting the winding center and one end of the first portion away from the second portion is defined as a second virtual line, and an angle between the first virtual line and the second virtual line is not less than 10°, reducing a possibility of fracture at a welding edge.

## Description

### TECHNICAL FIELD

This application relates to the field of battery technologies, and in particular, to a cylindrical battery and an electric device.

### BACKGROUND

At present, a cylindrical battery typically includes an electrode assembly and a housing. The electrode assembly is accommodated in the housing. The electrode assembly includes a positive electrode sheet, a positive electrode tab, a negative electrode sheet, and a negative electrode tab. The positive electrode sheet is welded and fixed to the positive electrode tab. The negative electrode sheet is welded and fixed to the negative electrode tab. During charge and discharge of the cylindrical battery, a volume of the electrode assembly repeatedly swells and contracts, causing a welding edge between the negative electrode sheet and the negative electrode tab to be repeatedly pulled. This easily leads to fracture at the welding edge, resulting in failure of the cylindrical battery.

### SUMMARY

Some embodiments of this application provide a cylindrical battery and an electric device to reduce a possibility of fracture at a welding edge.

According to a first aspect, an embodiment of this application provides a cylindrical battery, including an electrode assembly, where the electrode assembly is a wound structure, the electrode assembly has a winding central axis, the electrode assembly includes a first electrode sheet and a first tab, an outermost turn of the first electrode sheet is connected to the first tab, and the first electrode sheet is provided with a winding tail end;
an adhesive tape, where the adhesive tape includes a first portion and a second portion that are connected; the first portion is attached to the first electrode sheet; the second portion is attached to the first tab; along a winding direction of the electrode assembly, the second portion includes a first side and a second side that are oppositely disposed; the second side is closer to the winding tail end than the first side; and the first portion is located on the first side; and
when viewed from an extension direction of the winding central axis, a line connecting a winding center and one end of the first portion close to the second portion is defined as a first virtual line, a line connecting the winding center and one end of the first portion away from the second portion is defined as a second virtual line, and an angle between the first virtual line and the second virtual line is α, where α≥10°.

In this cylindrical battery, the adhesive tape is attached between the first electrode sheet and the first tab, and during charge-discharge cycling test, the pulling force on the first electrode sheet can be distributed through the adhesive tape, thereby reducing the pulling on the welding site and lowering the risk of fracture of the first electrode sheet at the welding edge. Setting α≥10° can reduce the possibility of adhesion failure due to a small adhesion area between the first portion and the first electrode sheet, facilitating distribution of the pulling force on the first electrode sheet.

In some embodiments of the first aspect of this application, along the winding direction of the electrode assembly, a length L2 of the second portion satisfies: 1 mm≤L2≤W; where W is a width of the first tab along the winding direction of the electrode assembly.

In the above one or more optional embodiments, setting 1 mm≤L2 reduces the possibility of adhesion failure due to the small adhesion area between the second portion and the first tab, which improves the adhesion stability between the adhesive tape and the first tab. Setting L2≤W, to be specific, setting the maximum length of the second portion to the width of the first tab along the winding direction of the electrode assembly, allows for overall attachment of the second portion to the first tab, reducing a possibility of suspension of a part of the second portion relative to the first tab.

In some embodiments of the first aspect of this application, the first electrode sheet of the outermost turn includes a coated region and an uncoated region, the winding tail end is an end of the uncoated region, and the first tab is connected to the uncoated region.

In the above one or more optional embodiments, the first tab is connected to the uncoated region of the first electrode sheet of the outermost turn, so that the welding site between the first tab and the first electrode sheet is located at the outermost turn of the first electrode sheet, facilitating adhesion of the adhesive tape.

In some embodiments of the first aspect of this application, along the winding direction of the electrode assembly, a length of the uncoated region between the first tab and the coated region is A, and a length of the first portion is L1, where L1≥A/3.

In the above one or more optional embodiments, setting L1≥A/3 reduces the possibility of adhesion failure due to the small adhesion area between the first portion and the first electrode sheet, which improves the adhesion stability between the adhesive tape and the first electrode sheet.

In some embodiments of the first aspect of this application, the cylindrical battery further includes a housing, and the electrode assembly is accommodated in the housing; and
along the winding direction of the electrode assembly, a length of the first portion is L1, a length of the second portion is L2, an inner circumference of the housing is C, a length of the adhesive tape is L, and L1+L2≤L≤C.

In the above one or more optional embodiments, provision of the housing allows for accommodation of the electrode assembly. Setting L1+L2≤L means setting the minimum length of the adhesive tape to a sum of the length of the first portion and the length of the second portion. In this case, when L>L1+L2, a part of the adhesive tape exceeding the first portion and the second portion can be attached to a side of the second portion close to the winding tail end, improving the adhesion stability of the adhesive tape. Setting L≤C, to be specific, setting the maximum length of the adhesive tape to be not greater than the inner circumference of the housing, reduces the impact on assembly.

In some embodiments of the first aspect of this application, the cylindrical battery further includes a housing, and the electrode assembly is accommodated in the housing; and
an elongation δ of the adhesive tape satisfies: δ≥1.2×((2πR-2πr)/2πr), where R is an inner radius of the housing, π is pi, and r is a radius of the electrode assembly.

In the above one or more optional embodiments, setting δ≥1.2×((2πR-2πr)/2πr) reduces the possibility of fracture of the adhesive tape while achieving distribution of the pulling force.

In some embodiments of the first aspect of this application, along the extension direction of the winding central axis, a width of the first electrode sheet is H, and a width of the adhesive tape is h, where 0.2H≤h≤H.

In the above one or more optional embodiments, setting 0.2H≤h reduces the possibility of less force bearing due to excessively narrow adhesive tape. Setting h≤H reduces the possibility of affecting the assembly of the bare cell due to excessively wide adhesive tape.

In some embodiments of the first aspect of this application, a thickness t of the adhesive tape satisfies: 0.01 mm≤t≤0.1 mm.

In the above one or more optional embodiments, setting 0.01 mm≤t reduces the possibility of less force distribution due to the excessively thin adhesive tape. Setting t≤0.1 mm reduces the possibility that assembly is hindered due to the excessively thick adhesive tape affecting the diameter of the bare cell.

In some embodiments of the first aspect of this application, the adhesive tape is located on a side of the first electrode sheet facing away from the winding central axis.

In the above one or more optional embodiments, the adhesive tape is provided on the outermost side of the first electrode sheet, facilitating adhesion.

In some embodiments of the first aspect of this application, the adhesive tape includes a substrate layer and an adhesive layer, and a peel strength between the adhesive layer and the first electrode sheet is F, where 0.5 N/mm≤F≤10 N/mm.

In the above one or more optional embodiments, setting 0.5 N/mm≤F≤10 N/mm ensures the adhesion strength between the adhesive tape and the first electrode sheet.

In some embodiments of the first aspect of this application, the adhesive layer includes an acrylic resin adhesive, a polyimide adhesive, or a silicone-fluororubber composite system adhesive.

In the above one or more optional embodiments, the adhesive layer includes one of an acrylic resin adhesive, a polyimide adhesive, or a silicone-fluororubber composite system adhesive, so that an adhesion property of the adhesive layer is achieved.

In some embodiments of the first aspect of this application, a material of the substrate layer is polypropylene, polyethylene terephthalate, or polyimide.

In the above one or more optional embodiments, the material of the substrate layer is one of polypropylene, polyethylene terephthalate, or polyimide, so that the elongation of the adhesive tape is achieved.

In some embodiments of the first aspect of this application, the first tab is welded to the first electrode sheet to form a welding region, and the second portion at least partially covers the welding region.

In the above one or more optional embodiments, the second portion at least partially covers the welding region, so that pulling on the welding site can be reduced, and the risk of fracture at the welding edge can be lowered.

In some embodiments of the first aspect of this application, the adhesive tape further includes a third portion; the first portion, the second portion, and the third portion are sequentially connected; the third portion is attached to the first electrode sheet; and along the winding direction of the electrode assembly, the third portion is located on the second side.

In the above one or more optional embodiments, provision of the third portion allows the adhesive tape to cover the entire welding region, which can improve adhesion stability and also cover burrs generated at the welding site, reducing the negative impact of burrs on battery performance.

In some embodiments of the first aspect of this application, the electrode assembly further includes a second electrode sheet and a second tab; the second electrode sheet has a polarity opposite to that of the first electrode sheet; the outermost turn of the first electrode sheet is located on an outer side of an outermost turn of the second electrode sheet; and the second tab is connected to the second electrode sheet.

In the above one or more optional embodiments, the second electrode sheet with a polarity opposite to that of the first electrode sheet is provided, and the second tab is connected to the second electrode sheet, to form the electrode assembly.

In some embodiments of the first aspect of this application, the first electrode sheet is a negative electrode sheet.

In the above one or more optional embodiments, the first electrode sheet is configured as a negative electrode sheet, and the first tab as a corresponding negative electrode tab, so that the adhesive tape is attached to the negative electrode sheet and the negative electrode tab, and the pulling force on the negative electrode sheet can be distributed to the adhesive tape, reducing the risk of fracture of the negative electrode sheet at the welding edge.

According to a second aspect, an embodiment of this application provides an electric device, where the electric device includes the cylindrical battery provided in any embodiment of the first aspect.

In the above one or more optional embodiments, the cylindrical battery provided in any embodiment of the first aspect exhibits good safety performance, enabling the electric device powered by the cylindrical battery to exhibit good electrical safety and electrical reliability.

### BRIEF DESCRIPTION OF DRAWINGS

To more clearly illustrate the technical solutions of some embodiments of this application, the drawings used in some embodiments will be briefly introduced below. It should be understood that the following drawings only illustrate some embodiments of this application and should not be regarded as limitations to the scope.
FIG. 1 is a schematic structural diagram of a cross-section of a cylindrical battery in some embodiments of this application;
FIG. 2 is a schematic structural diagram of a first electrode sheet in a flattened state connected to a first tab and an adhesive tape in some embodiments of this application;
FIG. 3 is a schematic structural diagram of another cross-section of a cylindrical battery in some embodiments of this application; and
FIG. 4 is a schematic structural diagram of an electric device in some embodiments of this application.

### Reference signs:

1000. electric device;
100. cylindrical battery;
10. electrode assembly; 11. first electrode sheet. 11a. winding tail end; 11b. coated region; 11c. uncoated region; 111. first current collector; 112. first active material layer; 12. second electrode sheet; 13. separator; 14. first tab;
20. adhesive tape; 21. first portion; 22. second portion; 22a. first side; 22b. second side; 23. third portion;
x. winding direction of the electrode assembly; and z. extension direction of a winding central axis of an electrode assembly.

### DETAILED DESCRIPTION

To make the objectives, technical solutions, and advantages of some embodiments of this application clearer, the technical solutions in some embodiments of this application will be clearly and thoroughly described below with reference to the drawings in some embodiments of this application. It is clear that the described embodiments are some but not all embodiments of this application. The components of some embodiments of this application described and illustrated herein can be arranged and designed in various different configurations.

Therefore, the following detailed description of some embodiments of this application provided for the drawings is not intended to limit the scope claimed by this application, but merely represents selected embodiments of this application. It should be noted that, in the case of no conflict, some embodiments and features in these embodiments of this application can be combined with each other.

It should be noted that similar reference signs and letters indicate similar items in the following drawings, and therefore, once an item is defined in one drawing, it does not need to be further defined and explained in subsequent drawings.

In the description of some embodiments of this application, it should be noted that the indicated orientation or positional relationship is based on the orientation or positional relationship shown in the drawings, or the conventional placement orientation or positional relationship of the product in the application is used, or the orientation or positional relationship conventionally understood by those skilled in the art, which is only for the convenience of describing this application and simplifying the description, and does not indicate or imply that the apparatus or element referred to must have a specific orientation, or be constructed and operated in a specific orientation, and therefore should not be understood as limitations to this application. In addition, the terms "first", "second", "third", and the like are only used for distinguishing descriptions and should not be understood as indication or implication of relative importance.

At present, market development indicates that the use of batteries is on the rise. Batteries are widely used in electric bicycles, electric motorcycles, electric vehicles, and other electric vehicles, as well as in multiple fields such as electric tools, drones, and energy storage devices. With the continuous expansion of battery application fields, the market demand is also continuously increasing.

As a type of battery, a cylindrical battery includes an electrode assembly and a housing. The housing includes a housing body and a cover. The electrode assembly is accommodated in the housing. The electrode assembly includes a positive electrode sheet, a positive electrode tab, a negative electrode sheet, and a negative electrode tab. The positive electrode sheet is welded and fixed to the positive electrode tab. The negative electrode sheet is welded and fixed to the negative electrode tab. In addition, the positive electrode tab is welded to the housing body, and the negative electrode tab is welded to a negative electrode pole or the cover.

During charge and discharge of the cylindrical battery, a volume of the electrode assembly repeatedly swells and contracts, causing a welding edge between the negative electrode sheet and the negative electrode tab to be repeatedly pulled. The negative electrode sheet and the negative electrode tab are generally joined by ultrasonic welding, resulting in initial loss at the welding edge of the tab. This easily leads to fracture at the welding edge after pulling, resulting in failure of the cylindrical battery.

To reduce the possibility of fracture at the welding edge, the prior art generally adopts a method of reducing a thickness of a negative electrode tab or increasing a thickness of a negative electrode sheet. Reduction in the thickness of the negative electrode tab results in a smaller thickness of the negative electrode tab, reducing the structural strength of the negative electrode tab. In this case, the negative electrode tab is prone to pulling deformation, and then bears less force, lowering a fracture possibility; however, current passing requirements cannot be satisfied after the thickness of the negative electrode tab is reduced. The method of increasing the thickness of the negative electrode sheet leads to loss of energy density.

Based on the above considerations, to reduce the possibility of fracture at the welding edge, an embodiment of this application provides a cylindrical battery. The cylindrical battery includes an electrode assembly and an adhesive tape. The electrode assembly is a wound structure, and the electrode assembly has a winding central axis. The electrode assembly includes a first electrode sheet and a first tab. An outermost turn of the first electrode sheet is connected to the first tab. The first electrode sheet is provided with a winding tail end. The adhesive tape includes a first portion and a second portion. The first portion is attached to the first electrode sheet. The second portion is attached to the first tab. Along a winding direction of the electrode assembly, the second portion includes a first side and a second side that are oppositely disposed. The second side is closer to the winding tail end than the first side, and the first portion is located on the first side.

The adhesive tape is attached between the first electrode sheet and the first tab, so that a pulling force on the first electrode sheet can be distributed through the adhesive tape in charge-discharge cycling test, thereby reducing the pulling on the welding site and lowering the risk of fracture of the first electrode sheet at the welding edge, further improving the safety performance of the cylindrical battery.

An embodiment of this application provides an electric device using a cylindrical battery as a power source, where the electric device may be, but is not limited to, electric tools, electric vehicles, drones, and energy storage devices. The electric tools may include electric drills, electric saws, and the like, and electric vehicles may include electric cars, electric motorcycles, electric bicycles, and the like.

Some embodiments of this application are further described below with reference to the drawings. In the drawings, a winding direction x of the electrode assembly corresponds to a length direction of the first electrode sheet and the second electrode sheet in a flattened state, and an extension direction z of the winding central axis of the electrode assembly corresponds to a width direction of the first electrode sheet and the second electrode sheet in the flattened state.

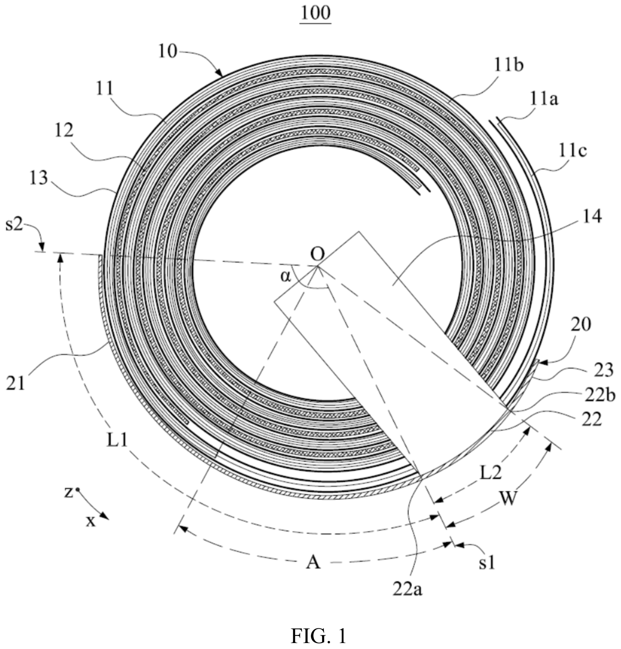

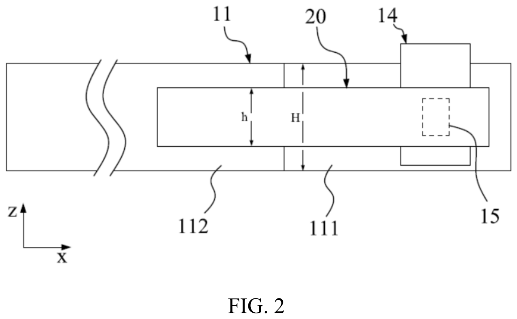

Refer to FIG. 1 and FIG. 2. An embodiment of this application provides a cylindrical battery 100, including a cylindrical housing (not shown in the figure), an electrode assembly 10, and an adhesive tape 20. The electrode assembly 10 is accommodated in the housing.

In some embodiments, the housing is a soft pouch, such as an aluminum-plastic film. In other embodiments, the housing is a hard housing, such as a plastic housing, or a metal housing including at least one of steel alloy, aluminum alloy, or copper alloy.

In some embodiments, as shown in FIG. 1, the electrode assembly 10 includes a first electrode sheet 11, a second electrode sheet 12, a separator 13, a first tab 14, and a second tab (not shown in the figure). The first electrode sheet 11, the separator 13, and the second electrode sheet 12 are stacked and wound to form a wound structure.

In some embodiments, as shown in FIG. 1, the first electrode sheet 11 includes a first current collector 111 and a first active material layer 112 provided on the first current collector 111. The second electrode sheet 12 includes a second current collector and a second active material layer provided on the second current collector.

In some embodiments, the first electrode sheet 11 is a positive electrode sheet, the first current collector 111 is a positive electrode current collector, and the first active material layer 112 is a positive electrode active material layer; the second electrode sheet 12 is a negative electrode sheet, the second current collector is a negative electrode current collector, and the second active material layer is a negative electrode active material layer. In other embodiments, the first electrode sheet 11 is a negative electrode sheet, the first current collector 111 is a negative electrode current collector, and the first active material layer 112 is a negative electrode active material layer; and the second electrode sheet 12 is a positive electrode sheet, the second current collector is a positive electrode current collector, and the second active material layer is a positive electrode active material layer.

In some embodiments, at least one of the positive electrode current collector or the negative electrode current collector is a metal layer. As an illustrative example, the positive electrode current collector may be a metal layer including at least one of aluminum, nickel, tantalum, or titanium, such as aluminum foil. The negative electrode current collector may be a metal layer including at least one of copper, nickel, tantalum, or titanium, such as copper foil. In other embodiments, at least one of the positive electrode current collector and the negative electrode current collector is a composite current collector.

In some embodiments, the positive electrode active material includes at least one of lithium cobalt oxide, lithium nickel manganese cobalt oxide, lithium nickel cobalt aluminum oxide, lithium iron phosphate, lithium manganese iron phosphate, or lithium manganate.

In some embodiments, the negative electrode active material includes at least one of graphite, hard carbon, soft carbon, silicon, silicon-oxygen material, or silicon-carbon material.

In some embodiments, the separator 13 is an insulating film material such as a polyethylene film, a polypropylene film, a polyester film, or a polyimide film.

In some embodiments, the cylindrical battery 100 further includes an electrolyte (not shown in the figure), and the electrolyte is contained in the housing.

In some embodiments, the electrolyte includes a lithium salt and a solvent. The lithium salt may be lithium hexafluorophosphate (LiPF₆), lithium tetrafluoroborate (LiBF₄), lithium perchlorate (LiClO₄), lithium trifluoromethanesulfinate (LiCF₃SO₃), lithium bis(trifluoromethanesulfonyl)imide (LiN(SO₂CF₃)₂), lithium tris(trifluoromethylsulfonyl)methide (LiC(SO₂CF₃)₃), or lithium bis(oxalato)borate (LiBOB). The solvent may be a carbonate compound, a carboxylate compound, an ether compound, other organic solvents, or a combination thereof.

In some embodiments, with reference to FIG. 1 and FIG. 2, the outermost turn of the first electrode sheet 11 is connected to the first tab 14, and the first electrode sheet 11 is provided with a winding tail end 11a.

The adhesive tape 20 includes a first portion 21 and a second portion 22, the first portion 21 is attached to the first electrode sheet 11, and the second portion 22 is attached to the first tab 14. Along the winding direction x of the electrode assembly 10, the second portion 22 includes a first side 22a and a second side 22b that are oppositely disposed, the second side 22b is closer to the winding tail end 11a than the first side 22a, and the first portion 21 is located on the first side 22a.

When viewed from the extension direction z of the winding central axis, a line connecting a winding center O and one end of the first portion 21 close to the second portion 22 is defined as a first virtual line s1, a line connecting the winding center O and one end of the first portion 21 away from the second portion 22 is defined as a second virtual line s2, and an angle between the first virtual line s1 and the second virtual line s2 is α, where α≥10°.

For example, the winding center O is located on the winding central axis of the electrode assembly 10.

A measurement/calculation formula for the angle α between the first virtual line s1 and the second virtual line s2 may be: α=(L1/2πr)×360°, where L1 is a length of the first portion 21, and r is a radius of the electrode assembly 10. In this case, this formula may be understood as dividing a length of the first portion 21 of the adhesive tape 20 by an outer circumference of the electrode assembly 10, and then multiplying by 360°, to obtain the angle α.

In some embodiments of this application, the value of π is 3.14.

In some embodiments of this application, the radius r of the electrode assembly 10 refers to an outer radius of the electrode assembly 10. A measurement method for the outer radius of the electrode assembly 10 is as follows: scanning the cylindrical battery 100 with a computed tomography (CT) scanner; and obtaining a circumscribed circle according to an outer contour of the electrode assembly 10, where a center of the circumscribed circle is a winding center O, a winding central axis passes through a winding center O, an outer diameter of the circumscribed circle is an outer diameter of the electrode assembly 10, and half of a length of the outer diameter is an outer radius. In measurement of the outer diameter, a thickness of the first tab 14 is included.

In this cylindrical battery, the adhesive tape 20 is attached between the first electrode sheet 11 and the first tab 14, and during charge-discharge cycling test, the pulling force on the first electrode sheet 11 may be distributed through the adhesive tape 20, thereby reducing the pulling on the welding site and lowering the risk of fracture of the first electrode sheet 11 at the welding edge. Setting α≥10° can reduce the possibility of adhesion failure due to a small adhesion area between the first portion 21 and the first electrode sheet 11, facilitating distribution of the pulling force on the first electrode sheet 11.

In some embodiments, with reference to FIG. 1, along the winding direction x of the electrode assembly 10, the length L2 of the second portion 22 satisfies: 1 mm≤L2≤W, where W is a width of the first tab 14 along the winding direction x of the electrode assembly 10.

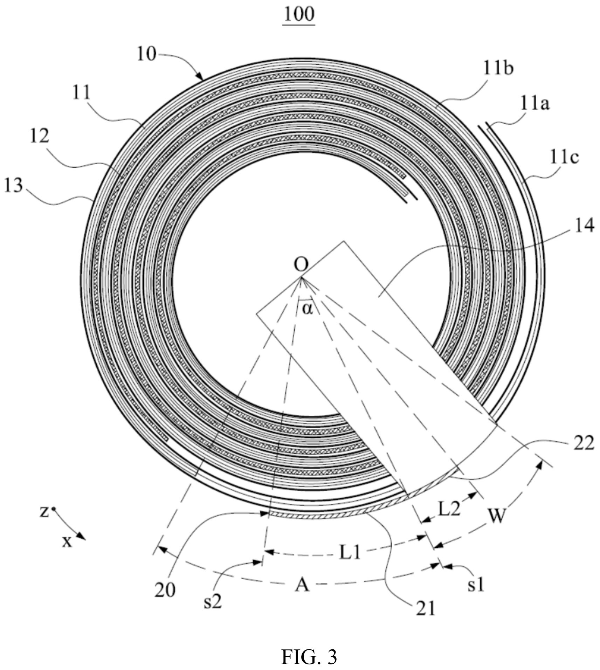

It should be noted that FIG. 1 shows the case where L2=W. In other embodiments, with reference to FIG. 3, the length L2 of the second portion 22 of the adhesive tape 20 may satisfy: 1 mm≤L2<W.

Setting 1 mm≤L2 reduces the possibility of adhesion failure due to the small adhesion area between the second portion 22 and the first tab 14, which improves the adhesion stability between the adhesive tape 20 and the first tab 14. Setting L2≤W, to be specific, setting the maximum length of the second portion 22 to the width of the first tab 14 along the winding direction x of the electrode assembly 10, allows for overall attachment of the second portion 22 to the first tab 14, reducing a possibility of suspension of a part of the second portion 22 relative to the first tab 14. When a part of the second portion 22 is suspended relative to the first tab 14, the suspended part of the second portion 22 relative to the first tab 14 is prone to wrinkling or adhesion to structures in the cylindrical battery other than the first tab 14 and the first electrode sheet 11, affecting battery performance. When 1 mm≤L2≤W, the possibility of adhesion failure due to the small adhesion area between the second portion 22 and the first tab 14 can be reduced, and the adhesion stability between the adhesive tape 20 and the first tab 14 is improved.

In some embodiments, with reference to FIG. 1 and FIG. 2, the first electrode sheet 11 of the outermost turn includes a coated region 11b and an uncoated region 11c; the winding tail end 11a is an end of the uncoated region 11c; and the first tab 14 is connected to the uncoated region 11c.

The first tab 14 is connected to the uncoated region 11c of the first electrode sheet 11 of the outermost turn, so that the welding site between the first tab 14 and the first electrode sheet 11 is located at the outermost turn of the first electrode sheet 11, facilitating adhesion of the adhesive tape 20.

In some embodiments, with reference to FIG. 1 and FIG. 2, along the winding direction x of the electrode assembly 10, the length L1 of the first portion 21 satisfies: L1≥A/3, where A is the length of the uncoated region 11c between the first tab 14 and the coated region 11b along the winding direction x of the electrode assembly 10.

It should be noted that FIG. 1 shows the case where L1>A. In other embodiments, with reference to FIG. 3, the length L1 of the first portion 21 of the adhesive tape 20 may satisfy: A≥L1≥A/3.

Setting L1≥A/3 reduces the possibility of adhesion failure due to the small adhesion area between the first portion 21 and the first electrode sheet 11, which improves the adhesion stability between the adhesive tape 20 and the first electrode sheet 11.

In some embodiments, with reference to FIG. 1, the cylindrical battery 100 further includes a housing (not shown in the figure), and the electrode assembly 10 is accommodated in the housing.

Along the winding direction x of the electrode assembly 10, the length L of the adhesive tape 20 satisfies: L1+L2≤L≤C, where L1 is the length of the first portion 21, L2 is the length of the second portion 22, and C is an inner circumference of the housing.

Provision of the housing allows for accommodation of the electrode assembly. Setting L1+L2≤L means setting the minimum length of the adhesive tape 20 to a sum of the length of the first portion 21 and the length of the second portion 22. In this case, when L>L1+L2, a part of the adhesive tape 20 exceeding the first portion 21 and the second portion 22 can be attached to a side of the second portion 22 close to the winding tail end 11a, improving the adhesion stability of the adhesive tape 20. Setting L≤C, to be specific, setting the maximum length of the adhesive tape 20 to be not greater than the inner circumference of the housing, reduces the impact on assembly. With L1+L2≤L≤C, the adhesion stability of the adhesive tape 20 can be improved and assembly is not affected by the excessive long adhesive tape 20.

In some embodiments, the cylindrical battery further includes a housing, the electrode assembly 10 is accommodated in the housing, and the electrode assembly 10 is cylindrical.

An elongation δ of the adhesive tape 20 satisfies: δ≥1.2×((2πR-2πr)/2πr), where R is an inner radius of the housing, π is pi, r is a radius of the electrode assembly 10.

Compared to the cylindrical battery, the size of the adhesive tape 20 is smaller. Micro-scale tensile equipment has advantages such as high-resolution mechanical loading, non-contact strain measurement, and non-destructive clamping, so the micro-scale tensile equipment can be used to test the elongation δ of the adhesive tape 20. A specific measurement method is as follows.

The adhesive tape 20 is cut into a sample strip with a width of 2 mm and a length of 6 mm. The sample strip is fixed by a vacuum micro-suction cup, where an aperture of the vacuum suction cup is 1µm to 3 µm, vacuum degree is less than 10⁻² Pa, and an adsorption force is greater than 10 mN. First, 0.5mN is preloaded, and held for 30s to eliminate clamping gaps; then the sample strip is stretched at a stretching speed of 0.1 µm/s until the sample strip is fractured. A sampling frequency is set as follows: the sampling frequency of an elastic segment is not less than 100 Hz; and a sampling frequency after yielding is not less than 500 Hz (to capture localized deformation). A gauge length at fracture is recorded, and the elongation δ of the sample strip is calculated according to *δ =* (*L*f - *L*₀)/*L*₀×100%, where *L*₀ is an original gauge length, and Lf is a gauge length at fracture.

A measurement method for the inner radius R of the housing is as follows: scanning the cylindrical battery 100 with a computed tomography (CT) scanner, and measuring an inner diameter of the housing, where half of the inner diameter is R.

Setting δ≥1.2×((2πR-2πr)/2πr) reduces the possibility of fracture of the adhesive tape 20 while achieving distribution of the pulling force.

In some embodiments, with reference to FIG. 2, along the extension direction z of the winding central axis, a width h of the adhesive tape 20 satisfies: 0.2H≤h≤H, where H is the width of the first electrode sheet 11.

Setting 0.2H≤h reduces the possibility of less force bearing due to excessively narrow adhesive tape 20. Setting h≤H reduces the possibility of affecting the assembly of the bare cell due to excessively wide adhesive tape 20. In a case where 0.2H≤h≤H, bearing of the pulling force can be maximized, and the possibility of affecting the assembly of the bare cell due to the excessively wide adhesive tape 20 can be reduced.

In some embodiments, a thickness t of the adhesive tape 20 satisfies: 0.01 mm≤t≤0.1 mm, where t may be one of 0.02 mm, 0.05 mm, 0.07 mm, 0.09 mm, or 0.1 mm.

Setting 0.01 mm≤t reduces the possibility of less force distribution due to the excessively thin adhesive tape 20. Setting t≤0.1 mm reduces the possibility that assembly is hindered due to the excessively thick adhesive tape 20 affecting the diameter of the bare cell. When 0.01 mm≤t≤0.1 mm, bearing of the pulling force can be maximized, reducing the possibility of affecting assembly due to the excessively thick adhesive tape 20.

In some embodiments, with reference to FIG. 1 and FIG. 2, the adhesive tape 20 is located on a side of the first electrode sheet 11 facing away from the winding central axis.

The adhesive tape 20 is provided on the outermost side of the first electrode sheet 11, facilitating adhesion.

In some embodiments, the adhesive tape 20 includes a substrate layer and an adhesive layer coated to the substrate layer, and a peel strength between the adhesive layer and the first electrode sheet 11 is F, where 0.5 N/mm≤F≤10 N/mm. F may be one of 0.8 mm, 1.0 mm, 4.5 mm, 7.3 mm, or 9.5 mm.

A test method for the peel strength F between the adhesive layer and the first electrode sheet 11 is as follows: a Gotech tensile testing machine is used to test the peel strength between the adhesive layer and the first electrode sheet 11 according to GB/T 2792-2014 "Measurement of peel adhesion properties for adhesive tapes". The test process is as follows.

The cylindrical battery 100 is discharged to a cutoff voltage (such as 3.0V). Then the cylindrical battery 100 is disassembled. The first electrode sheet 11 and the adhesive tape 20 bonded thereto are removed as a whole, and the surface electrolyte is wiped with lint-free paper. Then the adhesive tape 20 and the first electrode sheet 11 were cut into a strip sample. Along a length direction of the sample, a side of the first electrode sheet 11 without the adhesive tape 20 in the sample is attached to a steel plate with a double-coated tape (Nitto 5000NS), where an adhesion length is not less than 5 mm. The steel plate is fixed at a corresponding position of a Gotech tensile testing machine. One end of the adhesive tape 20 on another side of the sample is pulled and clamped by a clamp, where the pulled part of the adhesive tape 20 forms a 180° angle with the steel plate in space, and the clamp pulls the sample at a speed of 5±0.2 mm/s. A final average of pulling forces in a stable region is recorded as the peel strength between the adhesive layer of the adhesive tape 20 and the first electrode sheet 11, measured in N/mm. The stable region refers to a part where the pulling force does not change significantly over time, as depicted in a line graph plotting the pulling force applied by the clamp pulling the adhesive tape 20 versus time.

Setting 0.5 N/mm≤F≤10 N/mm ensures the adhesion strength between the adhesive tape 20 and the first electrode sheet 11.

In some embodiments, the adhesive layer includes one of an acrylic resin adhesive, a polyimide adhesive, or a silicone-fluororubber composite system adhesive; and a material of the substrate layer is one of polypropylene, polyethylene terephthalate, or polyimide. Different material types and/or qualities are determined to adjust the adhesion strength of the adhesive tape 20, thereby adjusting the peel strength between the adhesive layer and the first electrode sheet 11.

It should be noted that a peel strength between the adhesive layer and the first electrode sheet 11 before soaking in the electrolyte affects a peel strength F between the adhesive layer and the first electrode sheet 11 after soaking in the electrolyte, and therefore, different material types and/or qualities are determined to adjust the adhesion strength of the adhesive tape 20, so as to adjust F.

In some embodiments, with reference to FIG. 2, the first tab 14 is welded to the first electrode sheet 11 to form a welding region 15, and the second portion 22 at least partially covers the welding region 15.

The second portion 22 at least partially covers the welding region 15, so that pulling on the welding site can be reduced, and the risk of fracture at the welding edge can be lowered.

In some embodiments, with reference to FIG. 1, the adhesive tape 20 further includes a third portion 23. The first portion 21, the second portion 22, and the third portion 23 are sequentially connected. The third portion 23 is attached to the first electrode sheet 11. Along the winding direction x of the electrode assembly 10, the third portion 23 is located on the second side 22b.

It should be noted that FIG. 1 shows the case where the adhesive tape 20 includes the third portion 23. In other embodiments, with reference to FIG. 3, the adhesive tape 20 may not be provided with the third portion.

Provision of the third portion 23 allows the adhesive tape 20 to cover the entire welding region 15, which can improve adhesion stability and also cover burrs generated at the welding site, reducing the negative impact of burrs on battery performance.

In some embodiments, with reference to FIG. 1, the electrode assembly 10 further includes a second electrode sheet 12 and a second tab (not shown in the figure). The second electrode sheet 12 has a polarity opposite to that of the first electrode sheet 11. The outermost turn of the first electrode sheet 11 is located on an outer side of the outermost turn of the second electrode sheet 12. The second tab is connected to the second electrode sheet 12.

The second electrode sheet 12 with a polarity opposite to that of the first electrode sheet 11 is provided, and the second tab is connected to the second electrode sheet 12, to form the electrode assembly 10.

In some embodiments, with reference to FIG. 1, the first electrode sheet 11 is a negative electrode sheet, and the first tab 14 is a negative electrode tab.

The first electrode sheet 11 is configured as a negative electrode sheet and the first tab 14 as a negative electrode tab, so that the adhesive tape 20 is attached to the negative electrode sheet and the negative electrode tab, and the pulling force on the negative electrode sheet can be distributed to the adhesive tape 20, reducing the risk of fracture of the negative electrode sheet at the welding edge.

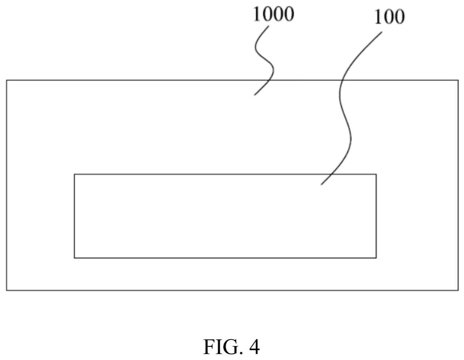

In some embodiments, with reference to FIG. 4, an embodiment of this application further provides an electric device 1000, including the cylindrical battery 100 provided in any of the above embodiments.

In some embodiments, the cylindrical battery 100 is a secondary battery, such as a lithium-ion battery or a sodium-ion battery. In some embodiments, the cylindrical battery 100 is a button secondary battery.

The cylindrical battery 100 serves as a power source of the electric device 1000, providing electrical energy for the operation of the electric device 1000.

The cylindrical battery 100 provided in any of the above embodiments exhibits good safety performance, enabling the electric device 1000 powered by the cylindrical battery 100 to exhibit good electrical safety and electrical reliability.

To verify the relevant impact of the solution provided in some embodiments of this application on a service life of the cylindrical battery 100, the inventor of this application has conducted the following experiments.

The experiment includes 2 comparative examples and 23 examples, where each comparative example and each example include 10 cylindrical batteries 100. In this experiment, the first electrode sheet 11 is configured as a negative electrode sheet, and the second electrode sheet 12 is configured as a positive electrode sheet.

In Example 1, the preparation process of the cylindrical battery 100 was as follows.
(1) Preparation of first electrode sheet 11, that is, negative electrode sheet: A negative electrode active material artificial graphite, a silicon-carbon material, conductive carbon black (Super P), a binder polyacrylic acid (PAA), and lithium difluorophosphate (LDPF) were mixed in a weight ratio of 69:5:6:19:1. Deionized water was added as a solvent; the mixture was adjusted to a slurry with a weight percentage of 55wt%, and was stirred to uniformity. The slurry was evenly applied to a first surface of a copper foil with a thickness of 10 µm, and dried at 90°C. The above coating steps were repeated on a second surface of the copper foil to obtain a negative electrode sheet with two sides coated. The initial negative electrode sheet was rolled to obtain a negative electrode active material layer. Then, the first tab 14 with a thickness of 60 µm was welded to a tail of the copper foil by ultrasonic welding, where a material of the first tab 14 was copper, and the adhesive tape 20 was attached to the first tab 14 and a side where the first tab 14 is near the winding center.
(2) Preparation of second electrode sheet 12, that is, positive electrode sheet: A positive electrode active material lithium cobalt oxide (LiCoO2), conductive carbon black (Super P), and polyvinylidene fluoride (PVDF) were mixed in a weight ratio of 96.5:1.5:2; N-methylpyrrolidone (NMP) was added as a solvent. The mixture was adjusted to a slurry with a solid content of 75wt%, and was stirred to uniformity. The slurry was evenly applied to a third surface of an aluminum foil with a thickness of 10 µm, and dried at 90°C. The above coating steps were repeated on a fourth surface of the aluminum foil to obtain a positive electrode sheet with two sides coated. The initial positive electrode sheet was cold-pressed to obtain a positive electrode active material layer, and then underwent processes such as cutting to obtain a positive electrode sheet. A second tab with a thickness of 60 µm was welded to a tail of the aluminum foil by ultrasonic welding, and a material of the second tab was aluminum.
(3) Preparation of electrolyte: In a dry argon atmosphere, organic solvents ethylene carbonate (EC), ethyl methyl carbonate (EMC), and diethyl carbonate (DEC) were mixed in a mass ratio of EC:EMC:DEC=30:50:20. Then a lithium salt lithium hexafluorophosphate (LiPF₆) was added to and dissolved in the organic solvent. The mixture was mixed to uniformity, to obtain an electrolyte with a lithium salt concentration of 1.15 mol/L.
(4) Preparation of separator 13: a polyethylene (PE) film with a thickness of 9 µm was used.
(5) Preparation of cylindrical battery 100: The first electrode sheet 11, the separator 13, and the second electrode sheet 12 were sequentially stacked and wound to obtain an electrode assembly 10 with an outer diameter of 20 mm. The outermost turn of the electrode assembly 10 was the first electrode sheet 11. The electrode assembly 10 was placed in the housing body of the housing. The first tab 14 was welded to the pole along the extension direction z of the winding central axis of the electrode assembly 10. The second tab was welded to the housing body. Then, the electrolyte was injected into the housing body, and the cover of the housing was welded to the housing body. After formation, a secondary battery was obtained. The outermost turn of the negative electrode sheet was connected to the first tab 14. The positive electrode sheet was connected to the second tab. The adhesive tape 20 was attached between the outermost turn of the negative electrode sheet and the first tab 14. Specifically, the first portion 21 of the adhesive tape 20 was attached to the first electrode sheet 11, and the second portion 22 of the adhesive tape 20 was attached to the first tab 14. The various parameters of the adhesive tape 20 were shown in Table 1.

The substrate layer of the adhesive tape 20 was a PET substrate, and the dimensions of the prepared cylindrical battery 100 were as follows: the inner radius R of the housing was 5 mm; the radius r of the electrode assembly was 4.8 mm; along the winding direction x of the electrode assembly 10, the length A of the uncoated region 11c between the first tab 14 and the coated region 11b was 6 mm; the width H of the first electrode sheet 11 was 4 mm; the width W of the first tab 14 along the winding direction x of the electrode assembly 10 was 3 mm; the thickness of the first electrode sheet 11 was 10 µm; and thickness of the first tab 14 was 60 µm.

### Examples 2 to 23

Examples 2 to 23 included most of the operation steps in Example 1. A difference from Example 1 was that some parameters in the preparation process of the cylindrical battery 100 were adjusted within a certain range. Details were shown in Table 1.

### Comparative example 1

Comparative example 1 included most of the operation steps in Example 1. A difference from Example 1 was that no adhesive tape was provided in Comparative example 1. Details were shown in Table 1.

### Comparative example 2

Comparative example 2 included most of the operation steps in Example 1. A difference from Example 1 was that the angle α between the first virtual line and the second virtual line of the adhesive tape 20 in Comparative example 2 was less than 10°. Details were shown in Table 1.

After the preparation of the cylindrical batteries 100 in Comparative Examples 1 and 2 and Examples 1 to 23 was completed, long-term cycling test was performed on the cylindrical batteries 100 in the groups. The test process was as follows. The cylindrical battery 100 to be tested was placed on a test platform, with a test temperature maintained at 25°C. The cylindrical battery 100 at the constant temperature was charged to a cutoff voltage at a 0.2C constant current, then charged at the constant voltage of the cutoff voltage until the current was 0.02C, then discharged at 0.2C to a voltage of 3.0V. One charge-discharge run was one cycle. A total of 800 cycles were performed. After the cycling test was completed, a cell was disassembled. A fracture state at the welding mark edge of the welding site between the negative electrode sheet and the first tab 14 in the cylindrical battery 100 in each group was recorded. The experimental results were recorded in Table 1 below.

**Table 1**

| Experiment group | α (°) | L2 (mm) | L1 (mm) | L (mm) | h (mm) | t (mm) | Quantity of cylindrical batteries with cracks or fractures at welding mark edge |
|---|---|---|---|---|---|---|---|
| Comparative example 1 | / | / | / | / | | | 9 |
| Comparative example 2 | 8 | 1 | 0.7 | 1.7 | 3 | 0.025 | 8 |
| Example 1 | 119 | 1 | 10 | 11 | 3 | 0.025 | 5 |
| Example 2 | 119 | 2 | 10 | 12 | 3 | 0.025 | 0 |
| Example 3 | 119 | 3 | 10 | 13 | 3 | 0.025 | 0 |
| Example 4 | 10 | 3 | 0.85 | 3.85 | 3 | 0.025 | 4 |
| Example 5 | 12 | 3 | 1 | 4 | 3 | 0.025 | 4 |
| Example 6 | 24 | 3 | 2 | 5 | 3 | 0.025 | 2 |
| Example 7 | 48 | 3 | 4 | 7 | 3 | 0.025 | 0 |
| Example 8 | 71 | 3 | 6 | 9 | 3 | 0.025 | 0 |
| Example 9 | 95 | 3 | 8 | 11 | 3 | 0.025 | 0 |
| Example 10 | 143 | 3 | 12 | 15 | 3 | 0.025 | 0 |
| Example 11 | 202 | 3 | 17 | 20 | 3 | 0.025 | 0 |
| Example 12 | 262 | 3 | 22 | 25 | 3 | 0.025 | 0 |
| Example 13 | 321 | 3 | 27 | 30 | 3 | 0.025 | 0 |
| Example 14 | 119 | 3 | 10 | 13 | 0.5 | 0.025 | 4 |
| Example 15 | 119 | 3 | 10 | 13 | 0.8 | 0.025 | 3 |
| Example 16 | 119 | 3 | 10 | 13 | 2 | 0.025 | 0 |
| Example 17 | 119 | 3 | 10 | 13 | 4 | 0.025 | 0 |
| Example 18 | 119 | 3 | 10 | 13 | 5 | 0.025 | 0 |
| Example 19 | 119 | 3 | 10 | 13 | 3 | 0.008 | 5 |
| Example 20 | 119 | 3 | 10 | 13 | 3 | 0.01 | 2 |
| Example 21 | 119 | 3 | 10 | 13 | 3 | 0.055 | 0 |
| Example 22 | 119 | 3 | 10 | 13 | 3 | 0.1 | 0 |
| Example 23 | 119 | 3 | 10 | 13 | 3 | 0.15 | 0 |

| | | | | | | | |
|---|---|---|---|---|---|---|---|
| Note: In the table, "/" indicates no data. | | | | | | | |

From Table 1, it can be learned that in the cycling test of the cylindrical batteries 100 in Examples 1 to 23, the quantity of cylindrical batteries 100 with cracks or fractures at the welding mark edge is lower than the quantity of cylindrical batteries 100 with cracks or fractures at the welding mark edge in Comparative Examples 1 and 2. It can be learned that, since the first portion 21 of the adhesive tape 20 in the cylindrical batteries 100 of Examples 1 to 23 is attached to the first electrode sheet 11, the second portion 22 of the adhesive tape 20 is attached to the first tab 14, and the angle α between the line connecting one end of the first portion 21 close to the second portion 22 and the winding center O (namely, the first virtual line s1) and the line connecting one end of the first portion 21 away from the second portion 22 and the winding center O (namely, the second virtual line s2) is greater than or equal to 10°. When the electrode assembly 10 experiences volume swelling during charge and discharge, the adhesive tape 20 can share the pulling force on the first electrode sheet 11, thereby reducing the pulling on the welding site and lowering the risk of fracture of the first electrode sheet 11 at the welding mark edge.

From Table 1, it can be learned that in Examples 1 to 3, the quantity of cylindrical batteries 100 with cracks or fractures at the welding mark edge in Examples 1 to 3 where the length L2 of the second portion 22 of the adhesive tape 20 satisfies: 1 mm≤L2≤W is lower than that in Comparative example 1. It can be learned that setting 1 mm≤L2≤W can reduce the possibility of adhesion failure due to the small adhesion area between the second portion 22 and the first tab 14, improving the adhesion stability between the adhesive tape 20 and the first tab 14.

From Table 1, it can be learned that in Examples 3 to 13, the quantity of cylindrical batteries 100 with cracks or fractures at the welding mark edge in Examples 3 to 13 where the angle α between the line connecting one end of the first portion 21 close to the second portion 22 and the winding center O (namely, the first virtual line s1) and the line connecting one end of the first portion 21 away from the second portion 22 and the winding center O (namely, the second virtual line s2) is greater than or equal to 10° is lower than that in Comparative examples 1 and 2. It can be learned that setting α≥10° can reduce the possibility of adhesion failure due to the small adhesion area between the first portion 21 and the first electrode sheet 11, facilitating distribution of the pulling force on the first electrode sheet 11. In Examples 3 and 6 to 13 where the length L1 of the first portion 21 of the adhesive tape 20 satisfies: L1≥A/3, the quantity of cylindrical batteries 100 with cracks or fractures at the welding mark edge is lower than that in Example 5. It can be learned that, on the basis of α≥10°, setting L1≥A/3 can further reduce the possibility of adhesion failure due to the small adhesion area between the first portion 21 and the first electrode sheet 11, improving the adhesion stability between the adhesive tape 20 and the first electrode sheet 11.

From Table 1, it can be learned that in Example 3 and Examples 14 to 18, the quantity of cylindrical batteries 100 with cracks or fractures at the welding mark edge in Examples 3 and 15 to 17 where the width h of the adhesive tape 20 satisfies: 0.2H≤h≤H is lower than that in Example 14. It can be learned that setting 0.2H≤h≤H can reduce the possibility of less force bearing due to the excessively narrow adhesive tape 20. For Example 18 where the width h of the adhesive tape 20 is greater than H, although the quantity of cylindrical batteries 100 with cracks or fractures at the welding mark edge is lower than that in Example 14, since the adhesive tape 20 is wider than the first electrode sheet 11, the adhesive tape 20 is wasted and also loss of energy density is caused.

From Table 1, it can be learned that in Example 3 and Examples 19 to 23, the quantity of cylindrical batteries 100 with cracks or fractures at the welding mark edge in Examples 3 and 20 to 22 where the thickness t of the adhesive tape 20 satisfies: 0.01 mm≤t≤0.1 mm is lower than that in Example 19. It can be learned that setting 0.01 mm≤t≤0.1 mm can reduce the possibility of less force bearing due to the excessively thin adhesive tape 20. For Example 23 where the thickness t of the adhesive tape 20 is greater than 0.1 mm, although the quantity of cylindrical batteries 100 with cracks or fractures at the welding mark edge can be lower than that in Example 19, since the adhesive tape 20 is thick, the diameter of the bare cell is affected, hindering assembly.

The above embodiments are only preferred embodiments of this application and are not used to limit this application. For those skilled in the art, various changes and modifications can be made to this application.

## Claims

1. A cylindrical battery (100), comprising:
an electrode assembly (10), **characterized in that** the electrode assembly (10) is a wound structure, the electrode assembly (10) has a winding central axis, the electrode assembly (10) comprises a first electrode sheet (11) and a first tab (14), an outermost turn of the first electrode sheet (11) is connected to the first tab (14), and the first electrode sheet (11) is provided with a winding tail end (11a);
an adhesive tape (20), wherein the adhesive tape (20) comprises a first portion (21) and a second portion (22) connected to each other; the first portion (21) is attached to the first electrode sheet (11); the second portion (22) is attached to the first tab (14); along a winding direction (x) of the electrode assembly (10), the second portion (22) comprises a first side (22a) and a second side (22b) that are oppositely disposed; the second side (22b) is closer to the winding tail end (11a) than the first side (22a); and the first portion (21) is located on the first side (22a); and
when viewed along an extension direction (z) of the winding central axis, a line connecting a winding center and one end of the first portion (21) closest to the second portion (22) is defined as a first virtual line, a line connecting the winding center and one end of the first portion (21) farthest from the second portion (22) is defined as a second virtual line, and an angle between the first virtual line and the second virtual line is α, wherein α≥10°.

2. The cylindrical battery (100) according to claim 1, **characterized in that** along the winding direction (x) of the electrode assembly (10), a length L2 of the second portion (22) satisfies: 1 mm≤L2≤W; wherein W is a width of the first tab (14) along the winding direction (x) of the electrode assembly (10).

3. The cylindrical battery (100) according to claim 1, **characterized in that** the outermost turn of the first electrode sheet (11) comprises a coated region (11b) and an uncoated region (11c), the winding tail end (11a) is an end of the uncoated region (11c), and the first tab (14) is connected to the uncoated region (11c).

4. The cylindrical battery (100) according to claim 3, **characterized in that** along the winding direction (x) of the electrode assembly (10), a length of the uncoated region (11c) between the first tab (14) and the coated region (11b) is A, and a length of the first portion (21) is L1, wherein L1≥A/3.

5. The cylindrical battery (100) according to claim 1, **characterized in that** the cylindrical battery (100) further comprises a housing, and the electrode assembly (10) is accommodated in the housing; and along the winding direction (x) of the electrode assembly (10), a length of the first portion (21) is L1, a length of the second portion (22) is L2, an inner circumference of the housing is C, a length of the adhesive tape (20) is L, and L1 + L2 ≤ L ≤ C.

6. The cylindrical battery (100) according to claim 1, **characterized in that** the cylindrical battery (100) further comprises a housing, and the electrode assembly (10) is accommodated in the housing; and an elongation δ of the adhesive tape (20) satisfies: δ≥1.2×((2πR-2πr)/2πr), wherein R is an inner radius of the housing, π is pi, and r is a radius of the electrode assembly (10).

7. The cylindrical battery (100) according to claim 1, **characterized in that** along the extension direction (z) of the winding central axis, a width of the first electrode sheet (11) is H, and a width of the adhesive tape (20) is h, wherein 0.2H≤h≤H.

8. The cylindrical battery (100) according to claim 1, **characterized in that** a thickness t of the adhesive tape (20) satisfies: 0.01 mm≤t≤0.1 mm.

9. The cylindrical battery (100) according to claim 1, **characterized in that** the adhesive tape (20) is located on a side of the first electrode sheet (11) facing away from the winding central axis.

10. The cylindrical battery (100) according to claim 1, **characterized in that** the adhesive tape (20) comprises a substrate layer and an adhesive layer, and a peel strength between the adhesive layer and the first electrode sheet (11) is F, wherein 0.5 N/mm≤F≤10 N/mm.

11. The cylindrical battery (100) according to claim 10, **characterized in that** the adhesive layer comprises an acrylic resin adhesive, a polyimide adhesive, or a silicone-fluororubber composite system adhesive; or
a material of the substrate layer is polypropylene, polyethylene terephthalate, or polyimide.

12. The cylindrical battery (100) according to claim 1, **characterized in that** the first tab (14) is welded to the first electrode sheet (11) to form a welding region, and the second portion (22) at least partially covers the welding region.

13. The cylindrical battery (100) according to claim 1, **characterized in that** the adhesive tape (20) further comprises a third portion (23); the first portion (21), the second portion (22), and the third portion (23) are sequentially connected; the third portion (23) is attached to the first electrode sheet (11); and along the winding direction (x) of the electrode assembly (10), the third portion (23) is located on the second side (22b).

14. The cylindrical battery (100) according to claim 1, **characterized in that** the electrode assembly (10) further comprises a second electrode sheet (12) and a second tab; the second electrode sheet (12) has a polarity opposite to that of the first electrode sheet (11); the outermost turn of the first electrode sheet (11) is located on an outer side of an outermost turn of the second electrode sheet (12); and the second tab is connected to the second electrode sheet (12); or
the first electrode sheet (11) is a negative electrode sheet.

15. An electric device (1000), comprising the cylindrical battery (100) according to any one of claims 1 to 14.
